(19) Europäisches Patentamt
European Patent Office
Office européen des brevets

(11) **EP 2 261 786 A2**

(12) **EUROPEAN PATENT APPLICATION**

(43) Date of publication:
**15.12.2010 Bulletin 2010/50**

(51) Int Cl.:
***G06F 3/048*** *(2006.01)*

(21) Application number: **10164597.6**

(22) Date of filing: **01.06.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS** | (72) Inventors:<br> • **Tseng, Huan-Chih**<br>  **Taoyuan County 330**<br>  **(TW)**<br> • **Tseng, Te-Pei**<br>  **Taoyuan County 330 (TW)** |
| (30) Priority: **05.06.2009 TW 98118800** | (74) Representative: **Becker Kurig Straus**<br>**Patentanwälte**<br>**Bavariastrasse 7**<br>**80336 München (DE)** |
| (71) Applicant: **HTC Corporation**<br>**Taoyuan County 330 (TW)** | |

(54) **Method, system and computer program product for correcting software keyboard input**

(57)     A method for correcting software keyboard input includes the following steps. A first set of touch coordinates from a user is obtained. The first set of touch coordinates includes a first horizontal touch coordinate and a first vertical touch coordinate. A horizontal calibration model and a vertical calibration model are obtained from a calibration database. The first horizontal touch coordinate and the first vertical touch coordinate are substituted into the horizontal calibration model and the vertical calibration model respectively to calculate a set of calibrated coordinates. The set of calibrated coordinates is compared with a set of center coordinates to determine a desired user input. A computer program product using the method and a system for correcting software keyboard input are also disclosed herein.

obtain a second set of touch coordinates from a user — 104

construct a horizontal calibration model using a second horizontal touch coordinate and horizontal center coordinate — 106

construct a vertical calibration model using a second vertical touch coordinate and vertical center coordinate — 108

store the horizontal calibration model and the vertical calibration model in the calibration database — 110

calibration database

obtain a first set of touch coordinates from a user — 112

obtain a horizontal calibration model and a vertical calibration model from a calibration database — 114

substitute a first horizontal touch coordinate and a first vertical touch coordinate into the horizontal calibration model and the vertical calibration model respectively to calculate a set of calibrated coordinates — 116

compare the set of calibrated coordinates with a set of center coordinates to determine a desired user input — 118

Fig. 1

## Description

## BACKGROUND

Field of Invention

A method, a system, and a computer program product for software keyboard input are provided. More particularly, a method, a system, and a computer program product for correcting software keyboard input are provided.

Description of Related Art

For hand-held devices, touch-based software keyboards are commonly used as the human-machine interface for data input. The touch-based software keyboards are rendered on the screen through software methods. Users may touch or press buttons on the software keyboards. The desired user input can be determined after touch positions are collected from the user and compared with positions of the buttons rendered on the screen.

However, errors might happen when touch coordinates are compared with positions of the buttons to determine the desired user input since users might have different habits such as parallax, different fingers used, ways to hold devices, and approaching directions. Software keyboards may not be able to correctly determine the desired user input, and errors are therefore generated accordingly.

Therefore, a new method for correcting software keyboard input is designed to improve the above shortcoming.

## SUMMARY

The objective of the present disclosure is to provide a method, system, and computer program product for correcting software keyboard input. The present disclosure provides calibration of the touch coordinates collected from the user's pressing on a software keyboard. The precision of determining the desired user input can be increased thereby.

an exemplary method for correcting software keyboard input includes the following steps. A first set of touch coordinates from a user is obtained. The first set of touch coordinates includes a first horizontal touch coordinate and a first vertical touch coordinate. A horizontal calibration model and a vertical calibration model are obtained from a calibration database. The first horizontal touch coordinate and the first vertical touch coordinate are substituted into the horizontal calibration model and the vertical calibration model respectively to calculate a set of calibrated coordinates. The set of calibrated coordinates is compared with a set of center coordinates to determine a desired user input.

An exemplary system for correcting software keyboard input includes a first coordinate obtaining module, a model obtaining module, a computing module, and a comparing module. The first coordinate obtaining module is for obtaining a first set of touch coordinates from a user, wherein the first set of touch coordinates comprises a first horizontal touch coordinate and a first vertical touch coordinate. The model obtaining module is for obtaining from a calibration database a horizontal calibration model and a vertical calibration model. The computing module is for substituting the first horizontal touch coordinate and the first vertical touch coordinate into the horizontal calibration model and the vertical calibration model respectively to calculate a set of calibrated coordinates. The comparing module is for comparing the set of calibrated coordinates with a set of center coordinates to determine a desired user input.

An exemplary computer program product includes program codes for executing the following steps. A first set of touch coordinates from a user is obtained. The first set of touch coordinates includes a first horizontal touch coordinate and a first vertical touch coordinate. A horizontal calibration model and a vertical calibration model are obtained from a calibration database. The first horizontal touch coordinate and the first vertical touch coordinate are substituted into the horizontal calibration model and the vertical calibration model respectively to calculate a set of calibrated coordinates. The set of calibrated coordinates is compared with a set of center coordinates to determine a desired user input.

## BRIEF DESCRIPTION OF THE DRAWINGS

The accompanying drawings are included to provide a further understanding of the disclosure, and are incorporated in and constitute a part of this specification. The drawings illustrate examples of the disclosure and, together with the description, serve to explain the principles of the disclosure. In the drawings,

Fig. 1 is a flow chart illustrating an exemplary method for regionally correcting software keyboard input using calibration models;
Fig. 2 is a flow chart illustrating an exemplary method for regionally correcting software keyboard input using calibration models;
Fig. 3A is a diagram illustrating an exemplary system for correcting software keyboard input; and
Fig. 3B is a diagram illustrating an exemplary calibration database construction system.

## DESCRIPTION OF THE PREFERRED EMBODIMENTS

Reference will now be made in detail to this disclosure, examples of which are illustrated in the accompanying drawings. Wherever possible, the same reference numbers are used in the drawings and the description to refer to the same or like parts.

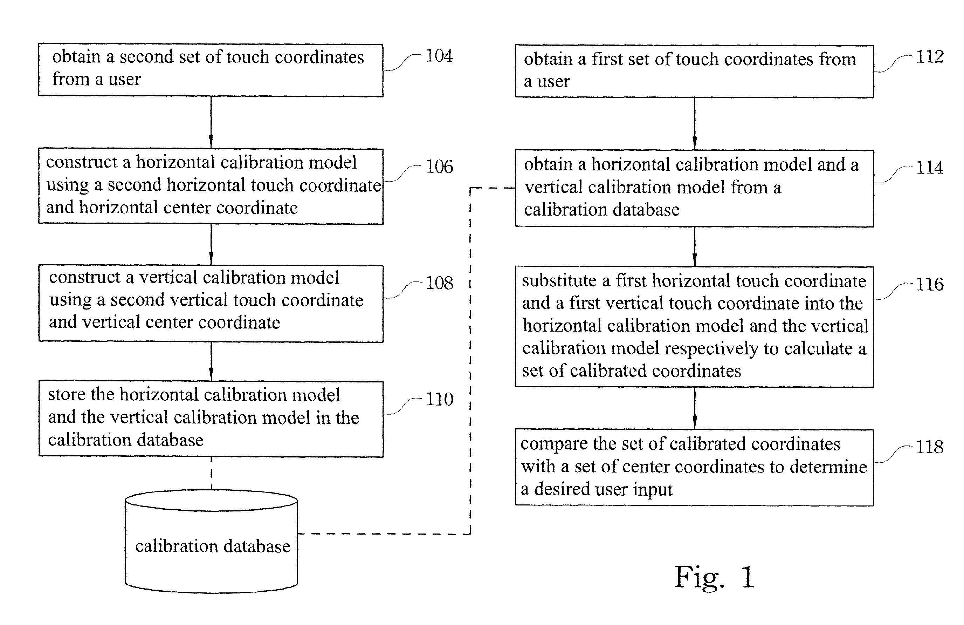

Fig. 1 is a flow chart illustrating an exemplary method for regionally correcting software keyboard input using calibration models. In another example, an exemplary computer program product may comprise program codes for executing the steps of the same method. The method for correcting software keyboard input includes the following steps. (It should be understood that the order of steps presented herein may be adjusted according to the actual practices. The steps or part of the steps may be performed at the same time.)

(1) Obtain a first set of touch coordinates from a user, wherein the first set of touch coordinates comprises a first horizontal touch coordinate and a first vertical touch coordinate (step 112).
(2) Obtain from a calibration database a horizontal calibration model and a vertical calibration model (step 114).
(3) Substitute the first horizontal touch coordinate and the first vertical touch coordinate into the horizontal calibration model and the vertical calibration model respectively to calculate a set of calibrated coordinates (step 116).
(4) Compare the set of calibrated coordinates with a set of center coordinates to determine a desired user input (step 118).

In one aspect, if the user presses the touch screen and enters some input having a set of touch coordinates $(x_t, y_t)$, then the horizontal touch coordinate $x_t$ and the vertical touch coordinate $y_t$ (independent variables in linear regression models) are substituted into the horizontal unary linear regression model and the vertical unary linear regression model respectively to calculate a set of calibrated coordinates (dependent variables in linear regression models). The set of calibrated coordinates are compared with a set of coordinates of the pressed screen button so as to determine the desired user input at that time.

In addition, when the user enters inputs with a software keyboard (which is the area that software buttons are distributed), buttons in one region of the software keyboard may need to be differentiated from those in another region of the software keyboard due to different usage scenarios. So, there is a need to apply different linear regression models to different regions of the software keyboard. For example, for users who hold handheld devices with both two hands, they might use their left and right thumbs to operate the software keyboard to enter texts. Generally speaking, the touch coordinates are more inclined to be on the lower right corner of the button when the inputs are entered with the right thumb, whereas the touch coordinates are more inclined to be on the lower left corner of the button when the inputs are entered with the left thumb. Since the touch coordinates vary with the hand used, significant errors may occur if the same linear regression model is used for all the buttons on the software keyboard.

Besides, this method may further comprise a step of providing a calibration database construction stage for use in correcting software keyboard input. The calibration database construction stage comprises the following steps. (It should be understood that the order of steps presented herein may be adjusted according to the actual practices. The steps or part of the steps may be performed at the same time.)

(1) Obtain a second set of touch coordinates from a user, wherein the second set of touch coordinates comprises a second horizontal touch coordinate and a second vertical touch coordinate (step 104). For each input, for example, if the second set of touch coordinates is (104, 42), this means that the second horizontal touch coordinate is 101 and the second vertical touch coordinate is 42. In one aspect, users may be asked to follow the directions on the screen and press the corresponding buttons on the software keyboard. A program collects the touch coordinates entered by users. Supposed users are asked to enter n characters, and the touch coordinates of the n inputs are $(x_1, y_1)$, $(x_2, y_2)$, $(x_3, y_3)$, ...$(x_{n-1}, y_{n-1})$, $(x_n, y_n)$ respectively. An X sequence and a Y sequence as follows are obtained:

$$X = \{x_1, x_2, x_3, \ldots, x_{n-1}, x_n\}$$

$$Y = \{y_1, y_2, y_3, \ldots, y_{n-1}, y_n\}$$

(2) Construct the horizontal calibration model using the second horizontal touch coordinate and the horizontal center coordinate (step 114). The second horizontal touch coordinate is computed against the horizontal center coordinate of the button that should be pressed, and the relative position of the second horizontal touch coordinate and the horizontal center coordinate are obtained. The horizontal calibration model can be constructed with the obtained information.
(3) Construct the vertical calibration model using the second vertical touch coordinate and the vertical center coordinate (step 108). The second vertical touch coordinate is computed against the vertical center coordinate of the button that should be pressed, and the relative position of the second vertical touch coordinate and the vertical center coordinate are obtained. The vertical calibration model can be constructed with the obtained information. In one aspect, the horizontal calibration model and the vertical calibration model are unary linear regression models. The unary linear regression analysis method constructs linear regression equations of X and Y based on the relations of the independent variable X and the dependent variable Y so as to perform the prediction. For instance, parameters a and b of the unary linear regression equation $Y_t = a + bx_t$ can be evaluated using the second horizontal touch coordinate and the horizontal center coordinate, and then the horizontal calibration model can be constructed by substituting parameters a and b into the equation. The vertical calibration model is constructed using the same method as well. Two sets of unary linear regression models are constructed here along different directions (X and Y). Aspects of the present disclosure are not limited to linear regression models. Various appropriate methods can be applied to construct the calibration model.

(4) Store the horizontal calibration model and the vertical calibration model in the calibration database (step 110). At this step, store unary linear regression models of X direction and Y direction into the database for use.

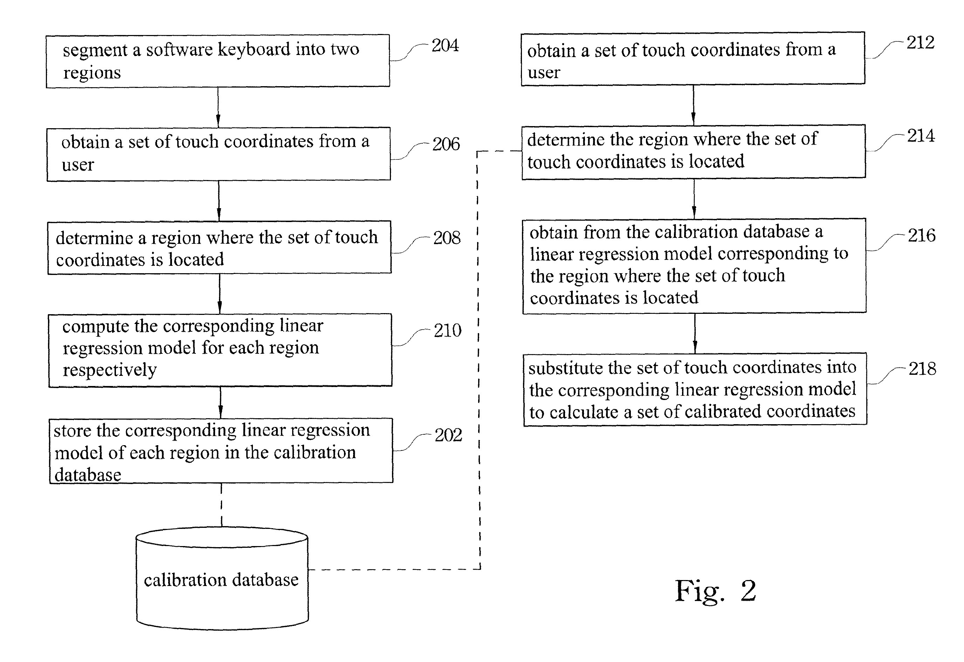

Fig. 2 is a flow chart illustrating an exemplary method for regionally correcting software keyboard input using calibration models. Under the aforementioned scenarios, a software keyboard may be segmented into multiple regions during the calibration database construction stage. Then, the steps in the calibration database construction stage may be repeated so as to construct a horizontal calibration model and a vertical calibration model for each of the regions respectively. In this example, the software keyboard is segmented into two regions (step 204) first. After a set of touch coordinates from a user is obtained (step 206), a region where the set of touch coordinates is located is determined (step 208). Then, the corresponding linear regression model is computed for each region respectively (step 210), and the corresponding linear regression model of each region is stored in the calibration database (step 202).

When this method for correcting software keyboard input is applied, a set of touch coordinates from a user is obtained first (step 212). After that, the region where the set of touch coordinates is located is determined (step 214), and a linear regression model corresponding to the region where the set of touch coordinates is located is obtained from the calibration database (step 216). Then, the set of touch coordinates is substituted into the corresponding linear regression model to calculate a set of calibrated coordinates (step 218).

The segmentation of a software keyboard into different regions may vary from case to case. That is, a software keyboard may be segmented into two regions, four regions, nine regions and etc. The segmentation may vary based on actual usage requirements.

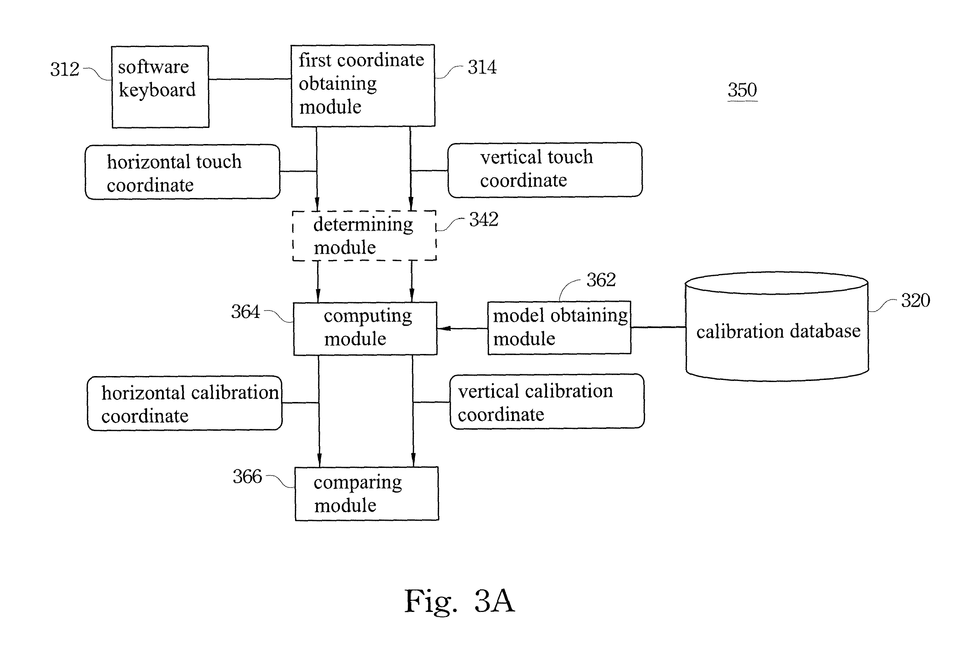

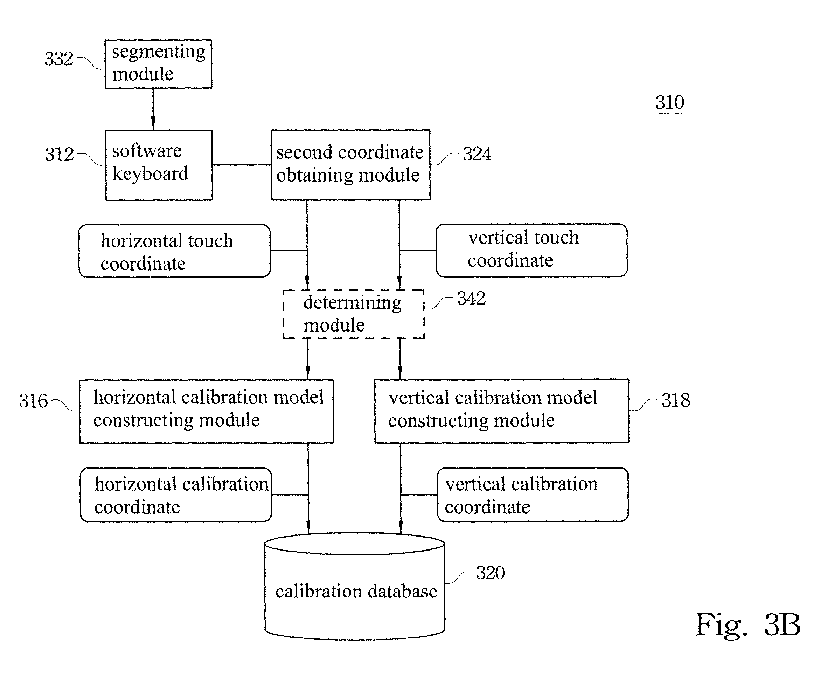

Please refer to Fig. 3A and 3B. Fig. 3A is a diagram illustrating an exemplary system for correcting software keyboard input. Fig. 3B is a diagram illustrating an exemplary calibration database construction system. The system for correcting software keyboard input 350 includes a software keyboard 312, a calibration database 320, a first coordinate obtaining module 314, a model obtaining module 362, a computing module 364, and a comparing module 366. The user may enter data using the touch-based input interface provided by the software keyboard 312. The first coordinate obtaining module 314 obtains a first set of touch coordinates from a user, wherein the first set of touch coordinates comprises a first horizontal touch coordinate and a first vertical touch coordinate.

The calibration database 320 stores the horizontal calibration model and the vertical calibration model constructed by the calibration database construction system 310. The model obtaining module 362 obtains from the calibration database 320 a horizontal calibration model and a vertical calibration model corresponding to the region where the first set of touch coordinates is located. The computing module 364 substitutes the first horizontal touch coordinate and the first vertical touch coordinate into the horizontal calibration model and the vertical calibration model respectively to calculate a set of calibrated coordinates (including a horizontal calibrated coordinate and a vertical calibrated coordinate). The comparing module 366 compares the set of calibrated coordinates with a set of center coordinates to determine a desired user input.

In addition, the system for correcting software keyboard input 350 may further comprise a determining module 342. When the software keyboard is segmented into multiple regions, the determining module 342 may obtain the first set of touch coordinates from the first coordinate obtaining module 314 and determine in which region the first set of touch coordinates is located. And, the model obtaining module 362 obtains from the calibration database 320 the horizontal calibration model and the vertical calibration model corresponding to the region where the first set of touch coordinates is located. Then, Based on where the first set of touch coordinates is located, the computing module 364 substitutes the first horizontal touch coordinate and the first vertical touch coordinate into the horizontal calibration model and the vertical calibration model respectively to calculate a set of calibrated coordinates. Lastly, the comparing module 366 compares the set of calibrated coordinates with a set of center coordinates to determine the desired user input.

Fig. 3B illustrates an exemplary calibration database construction system. The calibration database construction system 310 comprises a software keyboard 312, a second coordinate obtaining module 324, a horizontal calibration model constructing module 316, a vertical calibration model constructing module 318, and a calibration database 320. The software keyboard 312 provides the user with a touch input interface. The second coordinate obtaining module 324 obtains at least a second set of touch coordinates from the user, wherein the second set of touch coordinates comprises a second horizontal touch coordinate and a second vertical touch coordinate. The horizontal calibration model constructing module 316 constructs the horizontal calibration model using the second horizontal touch coordinate and the horizontal center coordinate obtained from the second coordinate obtaining module 324. The vertical calibration model constructing module 318 constructs the vertical calibration model using the second vertical touch coordinate and the vertical center coordinate obtained from the second coordinate obtaining module 324. The horizontal calibration model and the vertical calibration model may be constructed using linear regression models, especially unary linear regression models. The calibration database 320 stores the horizontal calibration model and the vertical calibration model.

Besides, the calibration database construction system 310 may further comprise a segmenting module 332 and a determining module 342. Different regions of the software keyboard may need to use different calibration models under different scenarios, and the segmenting module 332 may segment software keyboard into multiple regions based on actual usage requirements. After the segmentation, the second coordinate obtaining module 324 obtains a second set of touch coordinates, and the determining module 342 determines in which region the second set of touch coordinates is located. Then, the horizontal calibration model and vertical calibration model for each region may be constructed respectively.

In conclusion, the aforementioned examples disclose the method, system, and computer program product for correcting software keyboard input. The characteristics of users are learned in advance during the calibration database construction stage (which provides a training mode), and the calibration data for correcting coordinates is created and stored in the calibration database. Thus, users may use appropriate calibration models (especially the statistical and linear regression methods) in the future to calibrate touch coordinates when entering data using the software keyboard. The precision of determining the desired user input can be increased thereby.

It will be apparent to those skilled in the art that various modifications and variations can be made to the structure of the examples without departing from the scope or spirit of the disclosure. In view of the foregoing, it is intended that the examples cover modifications and variations of this disclosure provided they fall within the scope of the following claims and their equivalents.

**Claims**

1. A method for correcting software keyboard input comprising the following steps:

   obtaining a first set of touch coordinates from a user, wherein the first set of touch coordinates comprises a first horizontal touch coordinate and a first vertical touch coordinate;

   obtaining from a calibration database a horizontal calibration model and a vertical calibration model;

   substituting the first horizontal touch coordinate and the first vertical touch coordinate into the horizontal calibration model and the vertical calibration model respectively to calculate a set of calibrated coordinates; and

   comparing the set of calibrated coordinates with a set of center coordinates to determine a desired user input.

2. The method of claim 1, further comprising a step of providing a calibration database construction stage, the calibration database construction stage comprising the following steps:

   obtaining at least a second set of touch coordinates from the user, wherein the second set of touch coordinates comprises a second horizontal touch coordinate and a second vertical touch coordinate;

   constructing the horizontal calibration model using the second horizontal touch coordinate and the horizontal center coordinate;

   constructing the vertical calibration model using the second vertical touch coordinate and the vertical center coordinate; and

   storing the horizontal calibration model and the vertical calibration model in the calibration database.

3. The method of claim 2, wherein the horizontal calibration model and the vertical calibration model are unary linear regression models.

4. The method of claim 2, further comprising the following step before the step of obtaining at least a second set of touch coordinates from the user: segmenting a software keyboard into at least one region; and further comprising the following step before the step of constructing the horizontal calibration model using the second horizontal touch coordinate and the horizontal center coordinate: determining the second set of touch coordinates is located in one of the at least one region.

5. The method of claim 4, further comprising the following step before the step of obtaining from a calibration database a horizontal calibration model and a vertical calibration model: determining the first set of touch coordinates is located in one of the at least one region; wherein the step of obtaining from a calibration database a horizontal calibration model and a vertical calibration model comprises the following step: obtaining from the calibration database the horizontal calibration model and the vertical calibration model corresponding to the region where the first set of touch coordinates is located; and

wherein the step of substituting the first horizontal touch coordinate and the first vertical touch coordinate into the horizontal calibration model and the vertical calibration model comprises the following step: substituting the first horizontal touch coordinate and the first vertical touch coordinate respectively into the horizontal calibration model and the vertical calibration model corresponding the region where the first set of touch coordinates is located to calculate the set of calibrated coordinates.

6. A system for correcting software keyboard input comprising:

a first coordinate obtaining module for obtaining a first set of touch coordinates from a user, wherein the first set of touch coordinates comprises a first horizontal touch coordinate and a first vertical touch coordinate;

a model obtaining module for obtaining from a calibration database a horizontal calibration model and a vertical calibration model;

a computing module for substituting the first horizontal touch coordinate and the first vertical touch coordinate into the horizontal calibration model and the vertical calibration model respectively to calculate a set of calibrated coordinates; and

a comparing module for comparing the set of calibrated coordinates with a set of center coordinates to determine a desired user input.

7. The system of claim 6, further comprising a calibration database construction system, the calibration database construction system comprising:

a software keyboard for providing a touch input interface;

a second coordinate obtaining module for obtaining at least a second set of touch coordinates from the user, wherein the second set of touch coordinates comprises a second horizontal touch coordinate and a second vertical touch coordinate;

a horizontal calibration model constructing module for constructing the horizontal calibration model using the second horizontal touch coordinate and the horizontal center coordinate;

a vertical calibration model constructing module for constructing the vertical calibration model using the second vertical touch coordinate and the vertical center coordinate; and

a calibration database for storing the horizontal calibration model and the vertical calibration model.

8. The system of claim 7, wherein the horizontal calibration model and the vertical calibration model are unary linear regression models.

9. The system of claim 8, wherein the calibration database construction system further comprises:

a segmenting module for segmenting a software keyboard into at least one region.

10. The system of claim 9, wherein the calibration database construction system further comprises a determining module for determining the second set of touch coordinates is located in one of the at least one region.

11. The system of claim 9, wherein when the software keyboard is segmented into a plurality of regions, the calibration database construction system constructs a horizontal calibration model and a vertical calibration model for each of the regions respectively.

12. The system of claim 9, further comprising a determining module for determining the first set of touch coordinates is located in one of the at least one region.

13. The system of claim 12, wherein the model obtaining module obtains from the calibration database the horizontal calibration model and the vertical calibration model corresponding to the region where the first set of touch coordinates is located.

14. The system of claim 13, wherein the computing module substitutes the first horizontal touch coordinate and the first vertical touch coordinate respectively into the horizontal calibration model and the vertical calibration model corresponding the region where the first set of touch coordinates is located to calculate the set of calibrated coordinates.

15. A computer program product comprising program codes for executing the method as claimed in any of claim 1-5.

| obtain a second set of touch coordinates from a user | ⌐104 |

| construct a horizontal calibration model using a second horizontal touch coordinate and horizontal center coordinate | ⌐106 |

| construct a vertical calibration model using a second vertical touch coordinate and vertical center coordinate | ⌐108 |

| store the horizontal calibration model and the vertical calibration model in the calibration database | ⌐110 |

calibration database

| obtain a first set of touch coordinates from a user | ⌐112 |

| obtain a horizontal calibration model and a vertical calibration model from a calibration database | ⌐114 |

| substitute a first horizontal touch coordinate and a first vertical touch coordinate into the horizontal calibration model and the vertical calibration model respectively to calculate a set of calibrated coordinates | ⌐116 |

| compare the set of calibrated coordinates with a set of center coordinates to determine a desired user input | ⌐118 |

Fig. 1

EP 2 261 786 A2

EP 2 261 786 A2

segment a software keyboard into two regions — 204

obtain a set of touch coordinates from a user — 206

determine a region where the set of touch coordinates is located — 208

compute the corresponding linear regression model for each region respectively — 210

store the corresponding linear regression model of each region in the calibration database — 202

calibration database

obtain a set of touch coordinates from a user — 212

determine the region where the set of touch coordinates is located — 214

obtain from the calibration database a linear regression model corresponding to the region where the set of touch coordinates is located — 216

substitute the set of touch coordinates into the corresponding linear regression model to calculate a set of calibrated coordinates — 218

Fig. 2

Fig. 3A

EP 2 261 786 A2

332 — segmenting module

310

312 — software keyboard

second coordinate obtaining module — 324

horizontal touch coordinate

vertical touch coordinate

determining module — 342

316 — horizontal calibration model constructing module

vertical calibration model constructing module — 318

horizontal calibration coordinate

vertical calibration coordinate

calibration database — 320

Fig. 3B